# EUROPÄISCHE PATENTSCHRIFT

(11) **EP 3 337 929 B1**
(45) Veröffentlichungstag und Bekanntmachung des Hinweises auf die Patenterteilung: **08.11.2023**
(21) Anmeldenummer: 16770682.9
(22) Anmeldetag: 16.09.2016
(51) Int. Cl.: E02F 9/20, F16H 57/04

(54) **ANTRIEBSVORRICHTUNG MIT UMLAUFFILTERUNG**
DRIVE DEVICE HAVING CIRCULATION FILTERING
DISPOSITIF D'ENTRAÎNEMENT À FILTRAGE EN CIRCULATION

(30) Priorität: 17.09.2015 DE 102015012132
(43) Veröffentlichungstag der Anmeldung: 27.06.2018
(73) Patentinhaber: Liebherr-Components Biberach GmbH, 88400 Biberach an der Riß (DE)
(72) Erfinder: MARQUARD, Philipp, 88276 Berg (DE); WIDMANN, Roland, 88527 Unlingen (DE)
(74) Vertreter: Thoma, Michael
(86) Internationale Anmeldenummer: PCT/EP2016/001555
(87) Internationale Veröffentlichungsnummer: WO 2017/045759

(56) Entgegenhaltungen:
- WO-A1-2015/019813
- CN-U- 203 431 147
- JP-A- 2006 220 220
- US-A1- 2003 183 564
- US-B1- 6 189 655

## Beschreibung

Die vorliegende Erfindung betrifft eine Antriebsvorrichtung in Form eines Schwenk- und/oder Drehantriebs für Materialumschlaggeräte wie Mining Bagger, Tiefbaumaschinen oder Windkraftanlagen mit einem Motor, einem mit dem Motor verbundenen Getriebe, das durch ein Getriebeschmiermittel geschmiert ist, sowie einer Umlauffiltervorrichtung zum Filtern des Getriebeschmiermittels im Umlauf, wobei die Umlauffiltervorrichtung zumindest eine Umwälzpumpe zum Umwälzen und Filtrieren des Getriebeschmiermittels aufweist.

Solche Schwenkantriebe, die einen in der Regel hydraulisch ausgebildeten Motor mit einem damit verbundenen Getriebe, das als ein- oder mehrstufiges Planetengetriebe ausgebildet sein kann, aufweisen, werden gerne in Schwenkwerken von Baggern, beispielsweise Mining Baggern, Raupenbaggern, Mobilbaggern oder Hydroseilbaggern, aber auch bisweilen Tiefbaumaschinen wie Bohrgeräten, oder auch in Windkraftanlagen zur Pitch-Verstellung verwendet, wobei über die Getriebeabtriebswelle bzw. ein daran angebrachtes Abtriebsrad wie beispielsweise Abtriebsritzel ein Großwälzlager oder Zahnkränze angetrieben werden können, beispielsweise um den Oberwagen bzw. die Drehbühne des Geräts gegenüber dem Unterwagen um eine aufrechte Achse zu verschwenken.

Der Motor solcher Antriebsvorrichtungen ist üblicherweise reversierbar, so dass die Antriebsvorrichtung in ihrer Antriebsrichtung umkehrbar ist, ohne dass hierfür ein Schaltgetriebe notwendig wäre.

Bei solchen Schwenkantrieben hat die Qualität und der Grad der Verunreinigung des Getriebeschmiermittels - meist Schmieröl mit ggf. zugesetzten Zusatzstoffen - einen recht großen Einfluss auf das Verschleißverhalten und damit auch auf die Lebensdauer der Antriebsvorrichtung. Insofern kann Verschleiß reduziert und die Lebensdauer erhöht werden, indem das Getriebeschmiermittel gefiltert und hierdurch Verunreinigungen entfernt werden. Hierzu ist es vorteilhaft, das Getriebeschmiermittel umzuwälzen und durch einen Filter strömen zu lassen, um zyklisch die gesamte Schmiermittelmenge durch den Filter zu führen.

Durch die für eine solche Umlauffilterung benötigte Umwälzpumpe erhöht sich jedoch wiederum die Verschleißanfälligkeit, da die Umwälzpumpe per se eine weitere Baugruppe bildet und zusätzliche Antriebsbauteile wie Getriebestufen, Kupplungen und dergleichen zum Antreiben benötigt, die wiederum Verschleiß unterliegen. Fällt die Umwälzpumpe oder eine zugehörige Accessoir-Baugruppe wie ein Pumpenlager, eine Stirnradstufe zum Antreiben der Pumpe oder dergleichen aus, führt dies zu einem Ausfall der gesamten Antriebsvorrichtung, so dass die durch die Schmierstofffilterung an sich gewonnene Lebensdauer und der entsprechend reduzierte Verschleiß im Getriebe durch einen Verschleiß der zusätzlichen Komponenten der Umlauffiltervorrichtung wieder zunichte gemacht wird.

Ein weiteres Problem beim Einsatz solcher Umwälzpumpen ergibt sich aus der hin und her gehenden Antriebsrichtung von Schwenkantrieben. Ist die Umwälzpumpe direkt an den Hydraulik- oder Elektromotor oder das damit verbundene Getriebe angekoppelt, kehrt sich mit der Antriebsrichtung des Motors auch die Förderrichtung der Umwälzpumpe um, wodurch das Schmiermittel nicht mehr kontinuierlich in gleicher Richtung durch den Filter gefördert wird. Wird indes die Umwälzpumpe nicht mehr an den Motor oder das Getriebe angekoppelt, sondern durch einen separaten Antrieb wie beispielsweise einen Elektroantrieb angetrieben, werden nochmals weitere zusätzliche Bauteile benötigt, die wiederum selbst eine erhöhte Verschleißanfälligkeit mit sich bringen.

Aus der Schrift US 6,189,655 B1 ist ein Schaltgetriebe für ein Schwerlastfahrzeug bekannt, das von einem Verbrennungsmotor angetrieben wird und eine in das Getriebe integrierte Zahnradpumpe aufweist. Ferner beschreibt die Schrift US2003/0183564 A1 ein sogenanntes Transaxlegetriebe, wie es für Kraftfahrzeuge mit direkt auf der Antriebsachse sitzendem Motor, bespielsweise Heckmotorfahrzeuge mit Heckantrieb, verwendet wird. Dabei ist innerhalb des Getriebegehäuses des Transaxlegetriebes eine Pumpe mit eigenem Pumpengehäuse aufgenommen, die durch eine spezielle Filtereinrichtung hindurch Schmierstoff an die Getriebeelemente fördert. Ferner zeigt die Schrift JP 2006 220 220 A einen Schwenkantrieb mit einem Motor und einem damit verbundenen Getriebe, dessen Schmiermittel durch eine Umlauffiltervorrichtung gefiltert wird, deren Umwälzpumpe eine Umlaufrichtung für das Getriebeschmiermittel vorgibt.

Der vorliegenden Erfindung liegt daher die Aufgabe zugrunde, eine verbesserte Antriebsvorrichtung der eingangs genannten Art zu schaffen, die Nachteile des Standes der Technik vermeidet und Letzteren in vorteilhafter Weise weiterbildet. Insbesondere soll eine Umlauffilterung des Getriebeschmiermittels mit möglichst wenigen potentiell verschleißbehafteten Bauteilen erzielt werden, wobei insbesondere Verschleiß bringende Kontakte zwischen Bauteilen auf ein Minimum reduziert werden sollen.

Diese Aufgabe wird erfindungsgemäß durch eine Antriebsvorrichtung gemäß Anspruch 1 gelöst. Bevorzugte Ausgestaltungen der Erfindung sind Gegenstand der abhängigen Ansprüche.

Es wird also vorgeschlagen, auf einen separaten Antrieb für die Umwälzpumpe zu verzichten und auch keinen länglichen, mehrgliedrigen Antriebsstrang zum Anbinden der Umwälzpumpe an das Getriebe vorzusehen, wie dies bei einem externen Anflanschen der Umwälzpumpe an das Getriebe bzw. den Motor erforderlich wäre. Erfindungsgemäß ist die Umwälzpumpe in das Getriebe integriert, wobei das Pumpenrad der Umwälzpumpe mit einem Getriebeelement mitrotierend angeordnet ist. Dadurch dass die Umwälzpumpe im Inneren des Getriebes angeordnet ist und/oder einen Teil des Getriebes bildet und das Pumpenrad rotatorisch an ein an sich bereits vorhandenes, für die Kernfunktion des Getriebes vorgesehenes Getriebeelement rotatorisch angebunden ist, können zusätzliche verschleißbehaftete Antriebsstrang-Baugruppen wie zusätzliche Lager, Stirnradstufen oder auch ein separater Antriebsmotor zum Antreiben der Umwälzpumpe eingespart werden. Die Anzahl der potentiell verschleißbehafteten Bauteile ist auf ein Minimum reduziert, gleichzeitig erfährt die Baugröße der Antriebsvorrichtung insgesamt keine wesentliche Vergrößerung, wobei insbesondere lediglich die Baulänge des Antriebs geringfügig vergrößert wird. Gleichzeitig können auch Strukturbauteile der Umwälzpumpe selbst eingespart werden, indem Getriebebauteile eine Doppelfunktion erfüllen und gleichzeitig einen Teil des Getriebes und einen Teil der Umlaufpumpe bilden.

Insbesondere kann in Weiterbildung der Erfindung die Umwälzpumpe in einen Gehäuseabschnitt des Getriebes integriert sein, wobei der genannte Gehäuseabschnitt zumindest teilweise eine Pumpenkammer, in der das Pumpenrad drehbar aufgenommen ist, und/oder einen Pumpenkanal, in dem das vom Pumpenrad geförderte Getriebeschmiermittel gefördert wird, bilden kann. Insbesondere kann der genannte Gehäuseabschnitt ein Gegenstück zum Pumpenrad bilden, das mit dem Pumpenrad zusammenwirkt, um die Förderwirkung der Pumpe zu erreichen. Der genannte Getriebegehäuseabschnitt, in den die Umwälzpumpe integriert ist, kann vorteilhafterweise von einem Gehäuse- bzw. Getriebedeckel gebildet sein, der lösbar mit einem restlichen Korpus des Getriebegehäuses verbunden ist. Hierdurch ist ein einfacher Zugriff auf die Umwälzpumpe zum Zwecke der Wartung möglich.

Vorteilhafterweise ist das Pumpenrad als Peripheralrad ausgebildet, das in einem ringförmigen Förderkanal drehbar aufgenommen ist. Der genannte ringförmige Förderkanal ist hierbei von dem vorgenannten Gehäuseabschnitt gebildet bzw. in das Gehäuse des Getriebes integriert.

Ein solches Peripheralrad umfasst an seinem Umfang angebrachte, vorzugsweise gerade oder auch gebogene Schaufeln umfassen, die beim Umlaufen des Pumpenrads das Getriebeschmiermittel durch den ringförmigen Förderkanal fördern. Dabei ist zwischen der von dem Gehäuseabschnitt gebildeten Förderkanalwandung und den Schaufeln des Peripheralrads ein sich entlang des Umfangsbereichs des Pumpenrads erstreckender Förderspalt vorgesehen sein, der als Förderkanal dient, wobei im Ablauf-/Einlaufbereich ein Abstreifer bzw. Unterbrecher vorgesehen sein kann, der sich umfangsseitig mit ausreichendem Spiel an das Pumpenrad schmiegen kann und sozusagen den ringförmigen Förderspalt unterbricht bzw. umleitet, um das im ringförmigen Förderkanal umlaufende Getriebeschmiermittel durch einen Druckauslass abzufördern bzw. auslaufen zu lassen und durch einen Pumpeneinlass, der durch den genannten Unterbrecher bzw. Abstreifer vom Druckauslass getrennt ist, einströmen zu lassen bzw. anzusaugen. Der genannte Unterbrecher bzw. Abstreifer kann aus einem anderen Werkstoff als das Gehäuse, beispielsweise aus einem geeigneten Kunststoff, beispielsweise PTFE (Polytetrafluorethylen) bestehen oder damit beschichtet sein.

Vorteilhafterweise kann der genannte Abstreifer bzw. Unterbrecher aber auch aus dem Werkstoff des Gehäuses, in dem das Pumpenrad aufgenommen ist, gebildet sein und/oder einen integral einstückigen Bestandteil des genannten Gehäuses bilden.

Das Peripheralrad kann in verschiedener Weise geführt bzw. gelagert sein, beispielsweise Anlaufscheiben berühren oder hiervon auch durch einen minimalen Spalt bzw. Spiel beabstandet sein. Die genannten Anlaufscheiben können das Peripheralrad insbesondere in axialer Richtung führen und/oder von der Drehachse des Peripheralrades beabstandet an gegenüberliegenden Stirnseiten des Peripheralrads angeordnet sein, wobei die Anlaufscheiben am Gehäuse gelagert sein können. Solche Anlaufscheiben können vorteilhafterweise aus einem reibungsreduzierenden und/oder schmierenden Werkstoff wie bspw. einem geeigneten Kunststoff wie PTFE bestehen.

Um auch bei wechselnder Drehrichtung, wie sie bei einem Schwenkantrieb auftritt, gleichermaßen fördern zu können, sind die Schaufeln des Peripheralrads eben ausgebildet und radial, parallel zur Pumpenradachse angestellt.

Vorteilhafterweise kann das Pumpenrad direkt an das vorgenannte Getriebeelement ohne Zwischenschaltung von Wälzpaarungen oder zusätzlichen Getrieberädern rotatorisch drehfest angekoppelt sein. Um eine einfache, klein bauende und verschleißunanfällige Anordnung zu erhalten, kann das Pumpenrad koaxial zu dem Getriebeelement positioniert sein. Durch den Verzicht auf Achsversatz und/oder Winkelversatz kann eine unmittelbare Befestigung im Sinne einer rotatorischen Fixierung des Pumpenrads am Getriebeelement erreicht werden, so dass das Pumpenrad drehzahlsynchron mit dem Getriebeelement umläuft, ohne dass hierfür verschleißfördernde Wälzeingriffe oder dergleichen nötig wären.

Insbesondere kann das Pumpenrad durch eine Mitnahmeverzahnung rotatorisch an das Getriebeelement angebunden sein, so dass es sich mit diesem Getriebeelement mitdreht. Die genannte Mitnahmeverzahnung kann hierbei ineinander greifende Verzahnungselemente an dem genannten Getriebeelement und dem Pumpenrad aufweisen, die integral am Pumpenrad und am Getriebeelement angeformt, oder auch im Sinne eines zunächst separaten Bauteils daran starr befestigt sein können.

Das genannte Getriebeelement, an das das Pumpenrad direkt angebunden ist, kann ein im Kraftfluss des Getriebes liegendes Getriebeelement sein, das nicht eigens für den Antrieb des Pumpenrads vorgesehen ist, sondern der Übertragung des Kraftflusses zwischen Getriebeeingangsseite und Getriebeausgangsseite dient, d.h. an sich im Getriebe sowieso vorhanden und nicht eigens zum Antreiben der Umwälzpumpe vorgesehen ist. Dies minimiert die Bauteilzahl weiter.

Ist das Getriebe als Planetengetriebe ausgebildet, das zumindest eine Planetenstufe umfasst, kann das Pumpenrad an ein Getriebeelement der Planetenstufe angebunden sein, also grundsätzlich an dessen Sonnenrad, an dessen Planetenträger oder an dessen Hohlrad, je nachdem welches dieser Getriebeelemente aufgrund der Getriebeauslegung die passende Drehzahl für das Pumpenrad bereitstellt und eine günstige Anordnung erlaubt. Um eine einfache Integration des Pumpenrads in die Getriebearchitektur, insbesondere in das Getriebegehäuse zu erreichen, kann in vorteilhafter Weiterbildung der Erfindung das Pumpenrad an das Sonnenrad der zumindest einen Planetenstufe montiert sein.

In vorteilhafter Weiterbildung der Erfindung kann das Pumpenrad und/oder die gesamte Umwälzpumpe koaxial zu einer zentralen Mittellängsachse des Getriebes angeordnet sein.

Vorteilhafterweise kann die Umwälzpumpe an einem dem Motor der Antriebsvorrichtung zugewandten Endabschnitt des Getriebes angeordnet sein, wobei eine zentrale Getriebe- und/oder Motorwelle, die den Motor mit dem Getriebe verbindet, durch das Pumpenrad hindurch gehen kann. Das Pumpenrad kann hierzu eine zentrale Ausnehmung umfassen, mit der das Pumpenrad beispielsweise über die vorgenannte Mitnehmerverzahnung an die genannte Welle angebunden sein kann. Die genannte Welle kann hierbei das Sonnenrad der zumindest einen Planetenstufe bilden bzw. mit dem genannten Sonnenrad verbunden sein.

Das genannte Getriebe kann auch als mehrstufiges Planetengetriebe ausgebildet sein und/oder eine Planetenstufe mit einer weiteren Nicht-Planetenstufe kombinieren, je nachdem, welcher Anwendung und welcher Einbausituation die Antriebsvorrichtung gerecht werden soll. Auch Getriebeausbildungen gänzlich ohne Planetenstufe kommen in Betracht.

Um bei wechselnden Antriebsrichtungen und damit einhergehenden Umkehrungen in der Förderrichtung der Umwälzpumpe dennoch das Getriebeschmiermittel in gleicher Umlaufrichtung umlaufen zu lassen und/oder nur einen festen Druckanschluss und einen festen Saug- bzw. Einlassanschluss verwenden zu können, ist jeweils der Erfindung der Umlaufpumpe ein hydraulischer Gleichrichter zugeordnet, der unabhängig von der Drehrichtung der Pumpe einen festen Druckauslass und einen festen Rücklaufeinlass und damit eine feste Umlaufrichtung für das geförderte Getriebeschmiermittel vorgibt. Ein solcher Gleichrichter kann beispielsweise jeden Pumpenanschluss der Umlaufpumpe mittels jeweils zumindest zwei parallel geschalteten Druckleitungen sowohl mit dem Druckauslass als auch mit dem Rücklaufeinlass verbinden, wobei in den parallel geschalteten Druckleitungen Rückschlagventile und/oder Sperrventile oder andere steuerbare Ventile vorgesehen sein können, um je nach den Druckverhältnissen im jeweiligen Pumpenanschluss, d.h. bei Vorliegen von Unterdruck oder Überdruck, mit entweder dem Druckauslass oder dem Rücklaufeinlass zu verbinden bzw. durchzuschalten.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, stark vereinfachte Blockdarstellung eines Antriebsvorrichtung nach einer vorteilhaften Ausführung der Erfindung, die die Anordnung der Umwälzpumpe zwischen dem Hydraulikmotor und dem Getriebe der Antriebsvorrichtung und den der Pumpe zugeordneten hydraulischen Gleichrichter sowie von der Pumpe erzeugten Umlauf des zu filternden Getriebeschmierstoffs zeigt,
- Fig. 2:: ein schematisches Funktionsdiagramm des hydraulischen Gleichrichters aus Fig. 1, das die Verbindung der Pumpenanschlüsse mit einem festen Sauganschluss und einem festen Druckanschluss des Umlaufkreises über parallel geschaltete Druckleitungen und darin vorgesehene Rückschlagventile zeigt,
- Fig. 3:: eine Schnittansicht des Pumpenrads der Umlaufpumpe und dessen Aufnahme in einem Abschnitt des Gehäuses des Getriebes aus den vorhergehenden Figuren, und
- Fig. 4:: eine Gesamtansicht der Antriebsvorrichtung mit Hydraulikmotor und Getriebe in einer Teilschnittansicht, die im Teilschnitt die Anordnung des Pumpenrads der Umwälzpumpe und des hydraulischen Gleichrichters zeigt.

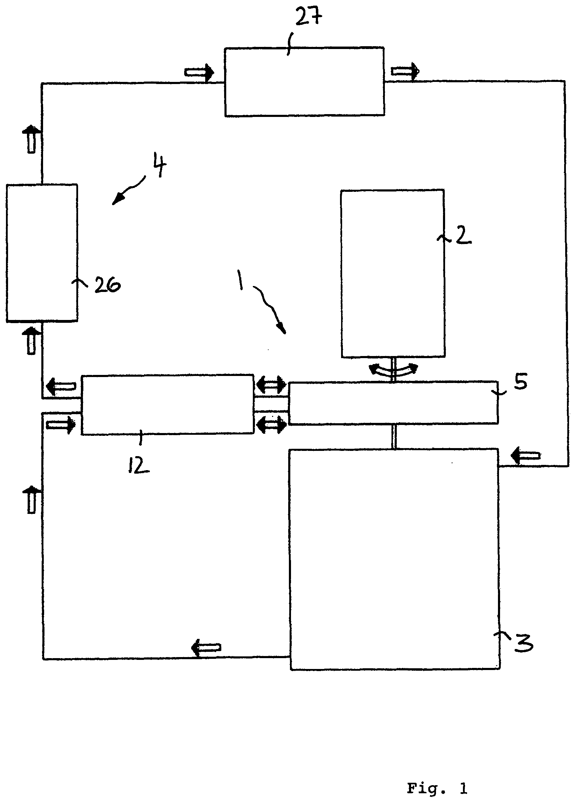

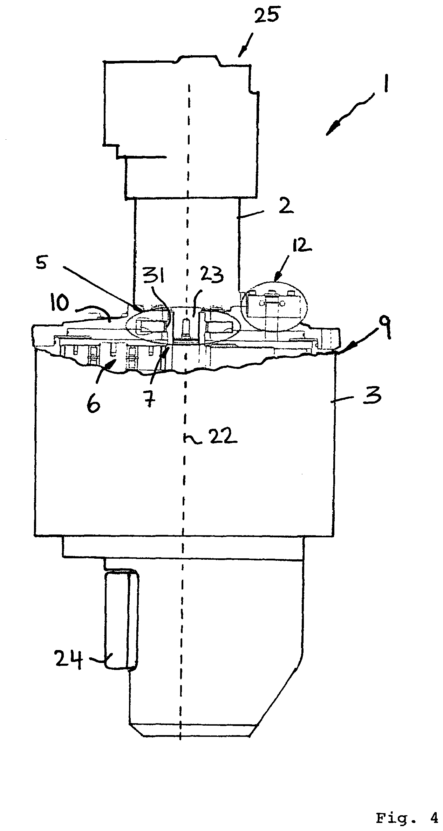

Wie Fig. 1 zeigt, umfasst die Antriebsvorrichtung 1 einen Motor 2 sowie ein daran angeschlossenes Getriebe 3, wobei der Motor 2 und das Getriebe 3 in zueinander koaxialer, hintereinander liegender Anordnung montiert sein können. Eine Motorabtriebswelle kann die Getriebeeingangswelle und umgekehrt bilden, bzw. verbindet eine zentrale Getriebe- und/oder Motorwelle 23 den Motor 2 mit dem Getriebe 3 und definiert die Mittellängsachse 22. Wie Fig. 4 zeigt, kann die Antriebsvorrichtung 1 einen insgesamt länglichen, näherungsweise turmförmigen Korpus bilden, der sich längs der geraden Mittellängsachse 22 erstreckt.

Das Getriebe 3, das eingangsseitig an den Motor 2 angeschlossen ist, besitzt abtriebsseitig beispielsweise ein Abtriebsritzel 24, das beispielsweise am vom Motor 2 abgewandten Endabschnitt des Getriebes 3 seitlich vorstehen bzw. aus dem Getriebegehäuse 9 herausstehen kann, beispielsweise um mit einem Großzahnkranz zu kämmen, wie er am Drehwerk eines Baggers verwendet wird. Es versteht sich jedoch, dass auch andere Abtriebselemente anstelle des genannten Abtriebsritzels 24 vorgesehen und anders positioniert sein können.

Die Antriebsvorrichtung 1 kann ggf. auch eine Bremsvorrichtung 25 umfassen, die beispielsweise unmittelbar dem Motor 2 zugeordnet und auf der vom Getriebe 3 abgewandten Stirnseite des Motors 2 positioniert sein kann.

Der genannte Motor 2 ist in seiner Drehrichtung reversierbar und kann beispielsweise als Hydraulikmotor, ggf. auch als Elektromotor ausgebildet sein. Das Getriebe 3 kann als ein- oder mehrstufiges Planetengetriebe ausgebildet sein. Wie Fig. 4 zeigt, können der Motor 2 und das Getriebe 3 durch flanschartiges Verbinden des Motorgehäuses mit dem Getriebegehäuse 9 verbunden sein, beispielsweise kann das Motorgehäuse stirnseitig an das Getriebegehäuse 9 angeflanscht sein. Gegebenenfalls kann auch ein gemeinsames Gehäuse mit mehreren Aufnahmekammern Verwendung finden.

Wie Fig. 1 zeigt, wird das Getriebeschmiermittel, insbesondere -öl, durch das das Getriebe 3 geschmiert wird, durch eine Umlauffiltervorrichtung 4 gefiltert, wobei hier nach und nach die gesamte Schmiermittelmenge im Umlauf durch einen Filter 26 gefördert und hierdurch filtriert wird, dem vorteilhafterweise ein Speicherbehälter 27 nachgeschaltet sein kann, in dem sich das gereinigte Getriebeschmiermittel sammeln kann. Um das Getriebeschmiermittel im Umlauf durch den Filter 26 und das Getriebe 3 führen zu können, ist eine Umwälzpumpe 5 vorgesehen, die vorteilhafterweise im Übergangsbereich zwischen Motor 2 und Getriebe 3 angeordnet sein kann.

Dabei ist die genannte Umwälzpumpe 5 in das Getriebegehäuse 9 integriert, wie dies Fig. 4 zeigt. Vorteilhafterweise kann die Umlaufpumpe 5 hierbei in einen stirnseitigen Gehäuseabschnitt des Getriebes 3 integriert sein, der dem Motor 2 zugewandt ist. Der genannte Gehäuseabschnitt 10 kann insbesondere ein Getriebegehäusedeckel sein, der lösbar mit dem restlichen Korpus des Getriebegehäuses 9 verbunden ist, vgl. Fig. 4.

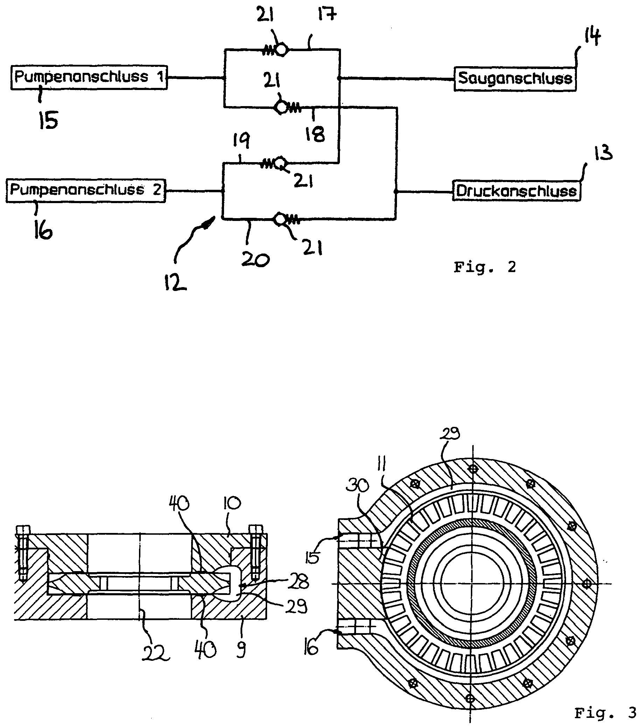

Die genannte Umwälzpumpe 5 ist eine Peripheralradpumpe, deren Pumpenrad 8 als Peripheralrad ausgebildet ist. Wie Fig. 3 zeigt, kann das genannte Pumpenrad 8 umfangsseitige Schaufeln 11 aufweisen, die zur Umfangsseite hin radial freiliegend abstehen können. Die genannten Schaufeln 11 können hierbei im Wesentlichen eben ausgebildet sein und sich in Ebenen erstrecken, die die Pumpenradachse, um die sich das Pumpenrad 8 dreht, enthalten, vgl. Fig. 3. Hierdurch kann eine vergleichbare Pumpwirkung in beiden Drehrichtungen des Pumpenrads 8 erzielt werden.

Wie Fig. 3 zeigt, ist das Pumpenrad 8 drehbar in einer Pumpenkammer 28 aufgenommen, die als taschenförmige Ausnehmung im Getriebegehäuse 9 bzw. dessen Gehäusedeckel 10 ausgebildet sein kann. Wie Fig. 3 zeigt, kann die Pumpenkammer 28 im Wesentlichen als ringnutförmige Ausnehmung ausgebildet sein, die in einem zylindrischen Gehäuseabschnitt bzw. -kragen ausgebildet und zur Innenseite offen ist, so dass das Pumpenrad 8 darin aufgenommen werden kann.

Die Pumpenkammer 28 bildet einen ringförmigen Förderkanal 29, der sich umfangsseitig um die Schaufeln 11 des Pumpenrads 8 herum erstreckt und in zwei Pumpenanschlüssen 15 und 16 endet, die voneinander durch einen Anlaufkörper 30 getrennt sind, der als Abstreifer bzw. Unterbrecher fungiert. Wie Fig. 3 zeigt, kann sich der Anlaufkörper 30 als Ringsegmentabschnitt unter Spiel an den Außenumfang der Schaufeln 11 schmiegen, während im übrigen Abschnitt des ringförmigen Förderkanals 29 ein Spalt zwischen Schaufeln 11 und Pumpenkammerwandung gegeben ist. Je nach Drehrichtung des Pumpenrads 8 fungiert der eine oder der andere der beiden Pumpenanschlüsse 15 und 16 als Druck- oder Sauganschluss der Umwälzpumpe 5. Der genannte Unterbrecher in Form des Anlaufkörpers 30 kann vorteilhafterweise aus dem Material des Getriebegehäuses bzw. des Gehäusedeckels 10 bestehen und/oder einen integralen Bestandteil des genannten Getriebegehäuses 9 bzw. des Gehäusedeckels 10 bilden. Wie Fig. 3 zeigt, kann der Abstreifer von einem Abschnitt des Getriebegehäuses 9 gebildet sein, der nach oben zum Gehäusedeckel 10 vorspringen kann.

Wie Fig. 3 zeigt, kann das Pumpenrad 8 zwischen dem Getriebegehäuse 9 und dessen Gehäusedeckel 10 sandwichartig aufgenommen sein. Hiervon unabhängig kann das genannte Pumpenrad 8 in der taschenförmigen Ausnehmung im Getriebegehäuse 9 bzw. dessen Gehäusedeckel 10 axial durch Anlaufscheiben 40 geführt sein, die von der Drehachse des Pumpenrads 8 beabstandet an dessen Stirnseiten angeordnet sein können, vgl. Fig. 3. Die genannten Anlaufscheiben 40 können am Getriebegehäuse 9 bzw. dem Gehäusedeckel 10 befestigt, insbesondere in dort vorgesehenen Taschen angeordnet sein. Vorteilhafterweise können die genannten Anlaufscheiben 40 aus einem reibungsreduzierenden und/oder schmierenden Werkstoff wie bspw. einem Kunststoffwerkstoff bestehen, insbesondere in Form von PTFE.

Das genannte Pumpenrad 8 ist dabei direkt an ein Getriebeelement des Getriebes 3 rotatorisch angekoppelt, so dass sich das Pumpenrad 8 mit diesem Getriebeelement mitdreht. Das genannte Getriebeelement kann insbesondere das Sonnenrad 7 einer Planetenstufe 6 sein, die eine erste Planetenstufe sein kann, welche an den Motor 2 angeschlossen ist, vgl. Fig. 4.

Die drehfeste Verbindung zwischen Pumpenrad 8 und Sonnenrad 7 kann beispielsweise durch eine Mitnehmerverzahnung 31 realisiert sein, vgl. Fig. 4.

Um auch bei wechselnden Antriebsrichtungen eine feste Umlauf- bzw. Umwälzrichtung des Getriebeschmiermittels zu haben, ist der Umwälzpumpe 5 ein hydraulischer Gleichrichter 12 zugeordnet, der beispielsweise außenseitig auf dem Getriebegehäuse 9, beispielsweise an dessen dem Motor 2 zugewandten Stirnseite angeordnet sein kann, vgl. Fig. 4.

Der genannte Gleichrichter 12 sorgt dafür, dass ungeachtet der Laufrichtung der Umwälzpumpe 5 das druckbeaufschlagte Getriebeschmiermittel stets auf denselben Druckanschluss 13 gegeben wird und umgekehrt der saugend wirkende Pumpenanschluss stets mit einem festen Sauganschluss 14 verbunden ist, über den das gefilterte Getriebeschmiermittel zurückläuft. Hier kann Schmiermittel aus dem Getriebe angesaugt werden. Der Rücklauf des gefilterten Schmierstoffs kann in den Innenraum des Antriebs gehen.

Wie Fig. 2 zeigt, kann der genannte Gleichrichter 12 zwei Paare von parallel geschalteten Druckleitungen 17 und 18 bzw. 19 und 20 umfassen. Ein erstes Paar dieser parallel geschalteten Druckleitungen 17 und 18 verbindet den ersten Pumpenanschluss 15 sowohl mit dem Sauganschluss 14 als auch mit dem Druckanschluss 13 des Gleichrichters 12, während das zweite Paar Druckleitungen 19 und 20 den anderen Pumpenanschluss 16 ebenfalls sowohl mit dem Sauganschluss 14 als auch mit dem Druckanschluss 13 des Gleichrichters 12 verbindet. In den genannten Druckleitungen 17 und 18 bzw. 19 und 20 sind dabei Sperrventile vorgesehen, die jeweils nur eine der Druckleitungen des jeweiligen Druckleitungspaares freischalten, während die jeweils andere Druckleitung gesperrt ist. Insbesondere können die genannten Sperrventile in Form von Rückschlagventilen 21 ausgebildet sein, die zueinander gegenläufig orientiert sind. Die Rückschlagventile 21, die in den zum Sauganschluss 14 führenden Druckleitungen 17 und 19 vorgesehen sind, sind derart angeordnet, dass sie zum Sauganschluss 14 hin sperren und vom Sauganschluss 14 zu den Pumpenanschlüssen 15 und 16 hin freischaltend sind. Umgekehrt sind die in den zum Druckanschluss 13 führenden Druckleitungen 18 und 20 angeordneten Rückschlagventile 21 derart angeordnet, dass sie zum Druckanschluss 13 hin freischalten und umgekehrt zu den Pumpenanschlüssen 15 und 16 hin sperren.

## Patentansprüche

1. Antriebsvorrichtung in Form eines Schwenk- und/oder Drehantriebs für Materialumschlaggeräte wie Bagger, mit einem in seiner Drehrichtung umkehrbar ausgebildeten Motor (2), einem mit dem Motor (2) verbundenen Getriebe (3), das durch ein Getriebeschmiermittel geschmiert ist, sowie einer Umlauffiltervorrichtung (4) zum Filtern des Getriebeschmiermittels im Umlauf, wobei die Umlauffiltervorrichtung (4) eine in das Getriebe (3) integrierte Umwälzpumpe (5) zum Umwälzen des Getriebeschmiermittels aufweist, **dadurch gekennzeichnet, dass** die Umwälzpumpe (5) ein mit einem Getriebeelement (7) mitrotierendes Pumpenrad (8) in Form eines Peripheralrads mit umfangsseitig vorgesehenen Schaufeln (11) aufweist, das in einer vom Getriebegehäuse (9) gebildeten Pumpkammer aufgenommen ist, wobei die Schaufeln (11) des Peripheralrads eben ausgebildet sind und radial, parallel zur Drehachse des Peripheralrads angestellt sind derart, dass das Peripheralrad in entgegengesetzten Drehrichtungen zumindest näherungsweise gleiche Pumpleistungen besitzt und an die Umwälzpumpe (5) ein hydraulischer Gleichrichter (12) angeschlossen ist, der unabhängig von der Drehrichtung der Umwälzpumpe (5) einen festen Druckanschluss (13) und einen festen Sauganschluss (14) und damit eine feste Umlaufrichtung für das Getriebeschmiermittel vorgibt.

2. Antriebsvorrichtung nach dem vorhergehenden Anspruch, wobei die Umwälzpumpe (5) in einen Gehäuseabschnitt (10) des Getriebes (3) integriert ist, wobei der Gehäuseabschnitt (10) zumindest teilweise eine Pumpkammer bildet, in der das Pumpenrad (8) drehbar aufgenommen ist.

3. Antriebsvorrichtung nach einem der vorhergehenden Ansprüche, wobei das Peripheralrad drehbar in einem ringförmigen Förderkanal aufgenommen ist, der in einem Abschnitt des Getriebegehäuses (9) ausgebildet ist.

4. Antriebsvorrichtung nach einem dem vorhergehenden Ansprüche, wobei der hydraulische Gleichrichter (12) jeden Pumpenanschluss (15, 16) jeweils durch ein Paar parallel geschalteter Druckleitungen (17, 18; 19, 20) sowohl mit dem genannten Druckauslass (13) als auch mit dem genannten Sauganschluss (14) verbindet, wobei in den genannten Druckleitungen (17, 18; 19, 20) Sperrventile, insbesondere zueinander gegenläufig wirksame Rückschlagventile (21) vorgesehen sind.

5. Antriebsvorrichtung nach einem der vorhergehenden Ansprüche, wobei das Pumpenrad (8) direkt an das genannte Getriebeelement (7) ohne Zwischenschaltung von Antriebsrädern oder Antriebswellen angekoppelt ist, insbesondere koaxial zu dem genannten Getriebeelement (7) angeordnet ist.

6. Antriebsvorrichtung nach einem der vorhergehenden Ansprüche, wobei das Getriebe (3) zumindest eine Planetenstufe (6) umfasst und das Pumpenrad (8) an das Sonnenrad (7) der genannten Planetenstufe angebaut ist.

7. Antriebsvorrichtung nach einem der vorhergehenden Ansprüche, wobei die Umwälzpumpe (5) koaxial zu einer zentralen Mittellängsachse (22) des Getriebes (3) angeordnet ist.

8. Antriebsvorrichtung nach einem der vorhergehenden Ansprüche, wobei die Umwälzpumpe (5) an einem dem Motor (2) zugewandten Endabschnitt des Getriebes (3) angeordnet ist und eine zentrale Getriebe- und/oder Motorwelle (23), die den Motor (2) mit dem Getriebe (3) verbindet, durch das Pumpenrad (8) hindurchtritt.

9. Antriebsvorrichtung nach dem vorhergehenden Anspruch, wobei die Umwälzpumpe (5) in einen lösbaren Getriebedeckel des Getriebegehäuses (9) des Getriebes (3) integriert ist.

10. Antriebsvorrichtung nach einem der vorhergehenden Ansprüche, wobei der Motor (2) als Hydraulikmotor ausgebildet ist.

## Claims

1. A drive device in the form of a pivot and/or rotary drive for material-transferring devices such as excavators, comprising an engine (2) reversible in its direction of rotation, a transmission (3) that is connected to the engine (2) and is lubricated by a transmission lubricant, and a circulation filter device (4) for filtering the transmission lubricant in circulation, wherein the circulation filter device (4) has a circulation pump (5) integrated into the transmission (3) for circulating the transmission lubricant, **characterized in that** the circulation pump (5) comprises a pump wheel (8), which is arranged for conjoint rotation with a transmission element (7), in the form of a peripheral wheel that has peripherally provided blades (11) and is accommodated in a pump chamber formed by the transmission housing (9), wherein the blades (11) of the peripheral wheel are configured flat and are set radially and in parallel to the axis of rotation of the peripheral wheel in such a way that the peripheral wheel exhibits at least approximately the same pumping performance in opposing directions of rotation and **in that** a hydraulic rectifier (12) is connected to the circulation pump (5) and specifies a fixed pressure port (13) and a fixed suction port (14), regardless of the direction of rotation of the circulation pump (5), and thus specifies a fixed direction of circulation for the transmission lubricant.

2. The drive device according to the preceding claim, wherein the circulation pump (5) is integrated into a housing section (10) of the transmission (3), wherein said housing section (10) forms at least a part of a pump chamber, in which the pump wheel (8) is rotatably accommodated.

3. The drive device according to one of the preceding claims, wherein the peripheral wheel is rotatably accommodated in an annular conveying duct, which is formed in a section of the transmission housing (9).

4. The drive device according to one of the preceding claims, wherein the hydraulic rectifier (12) connects each pump port (15, 16) by means of in each case one pair of parallel-connected pressure lines (17, 18; 19, 20) both to the aforementioned pressure port (13) and to the aforementioned suction port (14), wherein check valves, in particular non-return valves (21) acting in opposite directions, are provided in the pressure lines (17, 18; 19, 20).

5. The drive device according to one of the preceding claims, wherein the pump wheel (8) is coupled directly to the aforementioned transmission element (7), in particular arranged coaxially to the transmission element (7), without inserting drive wheels or drive shafts.

6. The drive device according to one of the preceding claims, wherein the transmission (3) comprises at least one planetary stage (6) and wherein the pump wheel (8) is installed on the sun gear (7) of the said planetary stage.

7. The drive device according to one of the preceding claims, wherein the circulation pump (5) is arranged coaxially to a central longitudinal center axis (22) of the drive (3).

8. The drive device according to one of the preceding claims, wherein the circulation pump (5) is arranged on an end section of the transmission (3) facing the engine (2), and a central transmission shaft and/or engine shaft (23) that connects the engine (2) to the transmission (3) passes through the pump wheel (8).

9. The drive device according to the preceding claim, wherein the circulation pump (5) is integrated into a removable transmission cover of the transmission housing (9) of the transmission (3).

10. The drive device according to one of the preceding claims, wherein the engine (2) is configured as a hydraulic engine.

## Revendications

1. Dispositif d'entraînement sous la forme d'un entraînement pivotant et/ou rotatif pour des engins de transbordement de matériau comme une excavatrice, avec un moteur (2) réalisé de manière réversible dans son sens de rotation, une transmission (3) reliée au moteur (2), qui est lubrifiée par un lubrifiant de transmission, ainsi qu'un dispositif de filtrage en circulation (4) destiné à filtrer le lubrifiant de transmission en circulation, dans lequel le dispositif de filtrage en filtration (4) présente une pompe de circulation (5) intégrée dans la transmission (3), destinée à faire circuler le lubrifiant de transmission, **caractérisé en ce que** la pompe de circulation (5) présente une roue d'impulseur (8) tournant de manière entraînée avec un élément de transmission (7) sous la forme d'une roue périphérique avec des aubes (11) prévues côté périphérique, qui est logée dans une chambre de pompe formée par le boîtier de transmission (9), dans lequel les aubes (11) de la roue périphérique sont réalisées de manière plane et sont placées radialement de manière parallèle par rapport à l'axe de rotation de la roue périphérique de telle manière que la roue périphérique possède au moins des puissances de pompage approximativement identiques dans des sens de rotation opposés et un redresseur (12) hydraulique, qui prédéfinit, indépendamment du sens de rotation de la pompe de circulation (5) un raccord de pression (13) fixe et un raccord d'aspiration (14) fixe et ainsi un sens périphérique fixe pour le lubrifiant de transmission, est raccordé à la pompe de circulation (5).

2. Dispositif d'entraînement selon la revendication précédente, dans lequel la pompe de circulation (5) est intégrée dans une section de boîtier (10) de la transmission (3), dans lequel la section de boîtier (10) forme au moins en partie une chambre de pompe, dans laquelle la roue d'impulseur (8) est logée de manière à pouvoir tourner.

3. Dispositif d'entraînement selon l'une quelconque des revendications précédentes, dans lequel l'impulseur de pompe est logé de manière à pouvoir tourner dans un canal de refoulement annulaire, qui est réalisé dans une section du boîtier de transmission (9).

4. Dispositif d'entraînement selon l'une quelconque des revendications précédentes, dans lequel le redresseur (12) hydraulique relie chaque raccord de pompe (15, 16) respectivement par une paire de conduits de pression (17, 18 ; 19, 20) branchés en parallèle à la fois à ladite sortie de pression (13) et audit raccord d'aspiration (14), dans lequel des soupapes de blocage, en particulier des soupapes anti-retour (21) actives en sens inverse les unes par rapport aux autres, sont prévues dans lesdits conduits de pression (17, 18 ; 19, 20).

5. Dispositif d'entraînement selon l'une quelconque des revendications précédentes, dans lequel la roue d'impulseur (8) est accouplée directement audit élément de transmission (7) sans intercaler des roues d'entraînement ou des arbres d'entraînement, en particulier est disposée de manière coaxiale par rapport audit élément de transmission (7).

6. Dispositif d'entraînement selon l'une quelconque des revendications précédentes, dans lequel la transmission (3) comprend au moins un étage de satellites (6) et la roue d'impulseur (8) est montée sur la roue solaire (7) dudit étage de satellites.

7. Dispositif d'entraînement selon l'une quelconque des revendications précédentes, dans lequel la pompe de circulation (5) est disposée de manière coaxiale par rapport à un axe longitudinal médian (22) central de la transmission (3).

8. Dispositif d'entraînement selon l'une quelconque des revendications précédentes, dans lequel la pompe de circulation (5) est disposée sur une section d'extrémité, tournée vers le moteur (2), de la transmission (3) et un arbre de transmission et/ou de moteur (23) central, qui relie le moteur (2) à la transmission (3), traverse la roue d'impulseur (8).

9. Dispositif d'entraînement selon la revendication précédente, dans lequel la pompe de circulation (5) est intégrée dans un couvercle de transmission amovible du boîtier de transmission (9) de la transmission (3).

10. Dispositif d'entraînement selon l'une quelconque des revendications précédentes, dans lequel le moteur (2) est réalisé en tant que moteur hydraulique.
